# EUROPEAN PATENT APPLICATION

(11) **EP 3 595 187 A1**
(43) Date of publication of application: **15.01.2020**
(21) Application number: 17899997.5
(22) Date of filing: 10.03.2017
(51) Int. Cl.: H04B 7/0413, H04L 27/26

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2017/009836
(87) International publication number: WO 2018/163431

(57) **Abstract**

The present invention is designed so that data communication processes are performed properly even when different slot configurations (for example, downlink control channels) than existing LTE systems are used. To achieve this purpose, a receiving section that receives downlink control information and a control section that controls receipt and/or transmission of scheduled data based on the downlink control information are provided, and the receiving section receives information related to a location to allocate the data in a time direction, for each predetermined frequency-domain unit.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 8 to 13), downlink (DL) and/or uplink (UL) communication are performed using 1-ms subframes (also referred to as "transmission time intervals (TTIs)" and so on). These subframes are the time unit for transmitting 1 channel-encoded data packet, and serve as the unit of processing in, for example, scheduling, link adaptation, retransmission control (HARQ (Hybrid Automatic Repeat reQuest)) and so on.

A radio base station controls the allocation (scheduling) of data for a user terminal, and reports the schedule of data to the user terminal using downlink control information (DCI). The user terminal controls the reception of DL data and/or the transmission of uplink data based on downlink control information. To be more specific, based on downlink control information, the user terminal receives downlink data in the same subframe as where the downlink control information is present, or transmits uplink data in a subframe located a predetermined period later (for example, 4 ms later).

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Future radio communication systems (for example, LTE Rel. 14, 15 or later versions, 5G, NR, etc.) might control data scheduling based on different configurations (slot configurations, for example) than existing LTE systems (for example, LTE Rel. 13 or earlier versions).

For example, in existing LTE systems, DL data in each subframe is scheduled based on downlink control information (DL assignment) transmitted every predetermined transmission time interval (subframe). Also, UL data after a predetermined period is scheduled based on downlink control information (UL grant) transmitted in a given subframe. Downlink control information is transmitted over the system band by using a downlink control channel (PDCCH (Physical Downlink Control CHannel)) that is allocated to a predetermined number of symbols from the top of a subframe.

Meanwhile, envisaging future radio systems, studies are in progress to change the allocation of downlink control information, downlink control channels and so forth, and use radio resources that are made available by this. In this way, when a slot configuration that is different than existing LTE systems is used in a radio system, a problem will arise in how to control the location to allocate data, transmission and receipt of data and the like, within each time unit (for example slot).

The present invention has been made in view of the above, and it is therefore an object of the present invention to provide a user terminal and a radio communication method, whereby data communication processes can be performed properly even when different slot configurations (for example, downlink control channel) are used than in existing LTE systems.

### Solution to Problem

According to one aspect of the present invention, a user terminal has a receiving section that receives downlink control information and a control section that controls receipt and/or transmission of scheduled data based on the downlink control information, and the receiving section receives information related to a location to allocate the data in a time direction, for each predetermined frequency-domain unit.

### Advantageous Effects of Invention

According to the present invention, data communication processes can be performed properly even when a slot configuration (for example, a downlink control channel) that is different than in existing LTE systems is used.

### Brief Description of Drawings

FIGs. 1A to 1D are diagrams to explain slot configurations;
FIGs. 2A and 2B are diagrams to explain frequency bands for monitoring downlink control channels;
FIG. 3 is a diagram to explain unused control resources;
FIGs. 4A to 4D are diagrams to explain locations for allocating data;
FIGs. 5A and 5B are diagrams to explain the tables used to report the locations to allocate data;
FIGs. 6A to 6C are diagrams to explain slot configurations and coding rates for use for data retransmission;
FIGs. 7A and 7B are diagrams to explain the number of slots used to transmit and retransmit data;
FIGs. 8A and 8B are diagrams to explain methods for allocating retransmitting data;
FIGs. 9A and 9B are diagrams to explain the number of layers used to transmit and retransmit data;
FIGs. 10A and 10B are diagrams to explain methods for allocating retransmitting data;
FIG. 11 is a diagram to show an exemplary schematic structure of a radio communication system according to one embodiment of the present invention;
FIG. 12 is a diagram to show an exemplary overall structure of a radio base station according to one embodiment of the present invention;
FIG. 13 is a diagram to show an exemplary functional structure of a radio base station according to one embodiment of the present invention;
FIG. 14 is a diagram to show an exemplary overall structure of a user terminal according to one embodiment of the present invention;
FIG. 15 is a diagram to show an exemplary functional structure of a user terminal according to one embodiment of the present invention; and
FIG. 16 is a diagram to show an exemplary hardware structure of a radio base station and a user terminal according to one embodiment of the present invention.

### Description of Embodiments

Envisaging future radio communication systems (5G/NR), research is underway to introduce time units (for example, a frame, a subframe, a slot, a minislot, a subslot, a transmission time interval (TTI), etc.) of different formats from those of existing LTE systems (LTE Rel. 13 or earlier versions).

For example, a subframe is a time unit that is formed in a predetermined time length (for example, 1 ms) regardless of numerology. Furthermore, a slot may be a time unit that is based on numerology (for example, subcarrier spacing, the length of symbols, etc.) and the number of symbols. For example, if the subcarrier spacing is 15 kHz or 30 kHz, the number of symbols per slot may be 7 or 14. Meanwhile, when the subcarrier spacing is 60 kHz or greater, the number of symbols per slot may be 14. In addition, a slot may include a plurality of minislots (subslots).

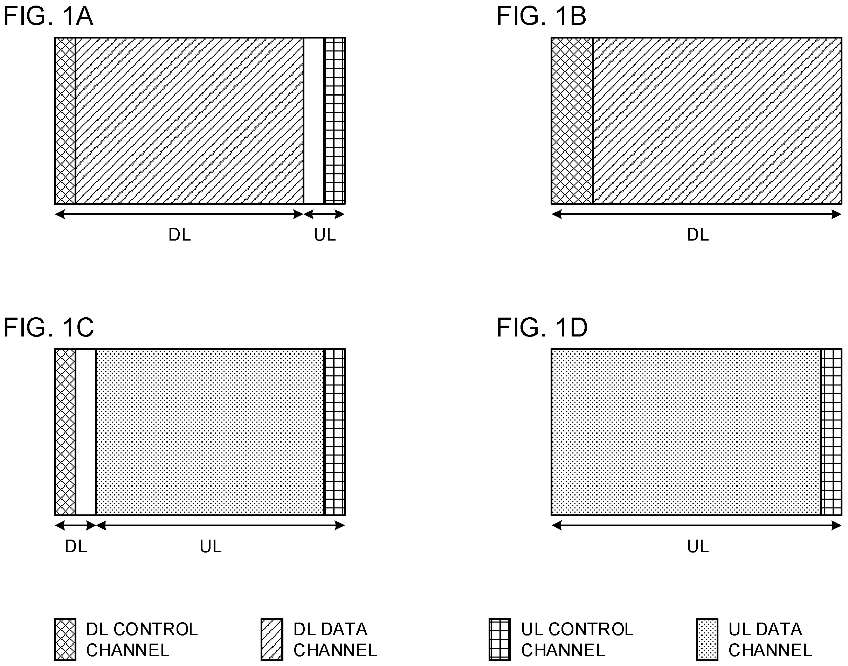

FIGs. 1 are diagrams to show examples of slot configurations (also referred to as "structures," "types," "formats," "patterns," etc.) for use in future radio communication systems. Note that FIGs. 1 show an overview of slot configurations in the time domain.

FIG. 1A shows a configuration in which a DL control channel, a DL data channel (also referred to as a "DL shared channel" and the like) and a UL control channel are time-division-multiplexed. FIG. 1B shows a configuration in which a DL control channel and a DL data channel are time-division-multiplexed. In this way, a slot in which a DL data channel is received may be referred to as a "DL-centric slot" or the like, because DL communication primarily takes place.

FIG. 1C shows a configuration in which a DL control channel, a UL data channel (also referred to as a "UL shared channel" and the like) and a UL control channel are time-division-multiplexed. FIG. 1D shows a configuration in which a UL data channel and a UL control channel are time-division-multiplexed. In this way, a slot in which a UL data channel is received may be referred to as a "UL-centric slot" or the like, because UL communication primarily takes place. Also, as shown in FIG. ID, a slot in which only UL transmission takes place may be referred to as a "UL-only slot" or the like.

The slot configurations shown in FIGs. 1 are simply examples, and by no means limiting. It is not necessary to multiplex all the channels shown in FIGs. 1 in a slot, and it is only necessary to allocate one or more channels in a slot. In addition, the order in which channels are allocated, the length of channels in the time direction, the length of gap periods and so on are not limited to those shown in FIGs. 1, and can be changed as appropriate. Also, in FIGs. 1, a DL control channel, a DL data channel (also referred to as a "DL shared channel" and the like) or a UL data channel (also referred to as a "UL shared channel," and the like), and a UL control channel are time-division-multiplexed, but this is by no means limiting. For example, a DL control channel and a DL data channel may be frequency-division-multiplexed, and/or a UL control channel and a UL data channel may be frequency-division-multiplexed.

A user terminal controls the receipt of a DL data channel and/or transmission of a UL data channel based on downlink control information (DCI) that is transmitted in a DL control channel. Also, the user terminal may transmit retransmission control information (also referred to as "HARQ-ACK (Hybrid Automatic Repeat reQuest-ACKnowledgement)," "ACK or NACK (A/N)," etc.) in response to the DL data channel as feedback, by using a UL control channel that is provided in the same slot as the DL data channel. Alternatively, the user terminal may transmit the A/N, as feedback, by using a UL control channel or a UL data channel in a subsequent slot.

Also, as shown in FIGs. 1, time (gap period) for switching DL and UL may be provided between a DL data channel and a UL control channel and/or between a DL control channel and a UL data channel. Also, time (gap period) for switching between UL and DL may be provided between a UL control channel and the time the next slot or frame (subframe or TTI) starts.

Alternatively, it is also possible to design a channel structure in which no explicit time (gap period) for switching between UL and DL is provided between a UL control channel and the time the next slot starts, and in which, during actual operation, time for switching UL and DL (gap period) is provided in this period based on what timing advance (TA) is applied to UL signals. In this case, referring to FIGs. 1, the gap period between the DL data channel and the UL control channel and/or between the DL control channel and the UL data channel may be comprised of an integer number of symbols, such as 1 symbol, 2 symbols, 3 symbols and so on. The gap period may have a length to match a non-integer number of symbols (for example, 0.5 symbols, 0.2 symbols, etc.).

In this way, future radio communication systems will be likely to communicate by using multiple configurations (for example, slot configurations, minislot configurations, etc.) with different DL and/or UL periods within a predetermined time unit (for example, a slot, a minislot, etc.).

Now, in conventional LTE systems, a downlink control channel (or downlink control information) is transmitted by using the whole system bandwidth (see FIG. 1A). Therefore, regardless of whether or not DL data is allocated in each subframe, UE needs to monitor the whole system bandwidth and receive (blind-decode) downlink control information.

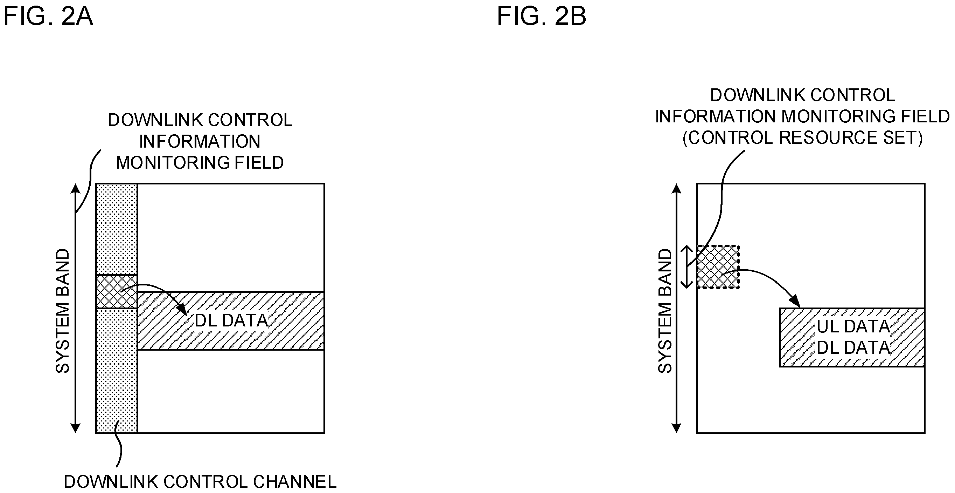

By contrast with this, in future radio communication systems, communication may not be performed using the whole system band in a predetermined carrier at all times, and it is more likely that communication will be controlled by configuring predetermined frequency fields (also referred to as "frequency bands"), dynamically or semi-statically, depending on the purpose of communication, the communicating environment and so on. For example, in future radio communication systems, downlink control information for a given UE needs not be necessarily allocated over the whole system band and transmitted, and, instead, it may be possible to configure a predetermined frequency field(a given frequency region) to control the transmission of downlink control information (see FIG. 2B).

Radio resources comprised of a predetermined frequency field and a time field (for example, 1 OFDM symbol, 2 OFDM symbols, etc.) configured for UE may be referred to as a "control resource set (CORSET)," a "control subband," a "search space set," a "search space resource set," a "control field," a "control subband," an "NR-PDCCH field," and so on.

A control resource set is comprised of predetermined resource units, and can be configured to be equal to or less than the system bandwidth (carrier bandwidth) or the maximum bandwidth where the user terminal can perform receiving processes. For example, a control resource set may be comprised of one or more RBs (PRBs and/or VRBs) in the frequency direction. Here, an RB refers to, for example, a frequency resource block unit comprised of 12 subcarriers. The UE can monitor for downlink control information within the range of the control resource set, and control receipt. By this means, in the receiving process of downlink control information, the UE does not have to keep monitoring the whole system bandwidth at all times, so that its power consumption can be reduced.

In addition, future radio communication systems are required to use radio resources more efficiently than heretofore. For example, a DL control channel may be allocated to the field at the top of a slot (the field to include the top symbol), and a UL control channel may be allocated to the field at the end of the slot (the field to include the last symbol). In this way, by allocating a control channel, which requires a smaller allocation field than data, to a field including the top and/or the last symbol of a slot, and allocating data to other symbols, resources can be used efficiently.

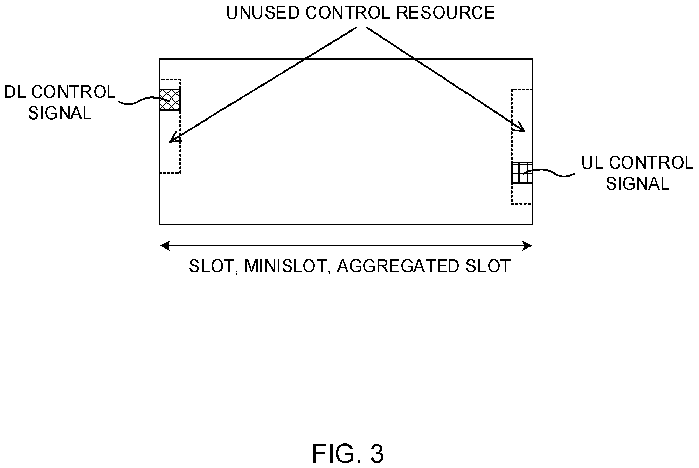

Also, as described above, when allocating control information to a predetermined frequency band, resources that are not used may be produced in symbols in which the control channel is mapped (also referred to as "unused resources," "unused control resources," etc.) (see FIG. 3). From the perspective of improving the efficiency of the use of resources, among the symbols (for example, the top symbol) in which the downlink control channel is transmitted, it may be possible to allocate data to unused resources in predetermined frequency fields in which no downlink control channel is allocated.

Meanwhile, if the location to allocate data (DL data and/or UL data) is configured flexibly based on the allocation of other channels (for example, control channels), the problem is how the user terminal should determine the location to allocate data in the time direction.

Then, the present inventors have come up with the idea of reporting information about the locations for allocating data in the time direction, to the user terminal. In particular, the present inventors have paid attention to the fact that, depending on what allocation method is used, unused resources where no control channel is mapped are produced in every predetermined frequency-domain unit, and come up with the idea of reporting to the user terminal in which locations in the time direction data is allocated in every predetermined frequency-domain unit. The locations to allocate data (DL data and/or UL data) in the time direction include the location where data starts being allocated and/or the location where this data allocation ends.

Also, in the event a slot configuration in which the field (for example, the number of symbols) to allocate data varies from slot to slot is used, the present inventors have focused on the fact that, when data is retransmitted based on a different slot configuration than that used before the retransmission of that data, the coding rate and/or others may vary between the data before the retransmission and the data that is retransmitted. In this case, communicating properly may be difficult depending on the way the coding rate changes between the two. So, presuming that there is data to be retransmitted, the present inventors have come up with the idea of configuring the number of predetermined time units and/or layers to use to retransmit this data differently from the number of time units and/or layers used before the retransmission of the data.

Now, embodiments of the present invention will be described below in detail with reference to the accompanying drawings. Each of the following embodiments may be applied alone or may be applied in combinations. Also, although the following embodiments will show cases in which data scheduling is controlled on a per slot basis, other time units (for example, subframes, minislots, subslots, transmission time intervals (TTIs), short TTIs, radio frames, etc.) are equally applicable. Also, the following embodiments can be applied to both UL data and DL data. Also, when changing the location to allocate other signals (or channels) other than data, the present embodiments may be applied also to these other signals.

### (First Example)

Now, with a first example of the present invention, a method for reporting information about the locations(positions) to allocate data channels (data) will be described below. Note that information about the locations for allocating data may include information about at least one of the location where the allocation is started ("starting position") and the location where the allocation ends ("ending position"), in the time direction.

A radio base station can report information related to the locations for allocating DL data, to a user terminal, by using at least one of downlink control information (DCI) that schedules this DL data, common signaling (common L1 signaling) that is reported in common to a plurality of user terminals or a predetermined user group, and higher layer signaling.

Also, the radio base station can report information related to the locations for allocating UL data, to the user terminal, by using at least one of downlink control information (DCI) that schedules this UL data, common signaling (common L1 signaling) that is reported in common to a plurality of user terminals or a predetermined user group, and higher layer signaling.

The information about the locations for allocating DL data and/or UL data is reported to the user terminal by using downlink control information or common signaling, so that the data allocation starting position and/or the ending position can be changed dynamically. The radio base station may combine downlink control information and higher layer signaling to report the locations to allocate data, to the user terminal.

Also, the radio base station may report information about the locations to allocate data, to the user terminal, per predetermined frequency unit. The predetermined frequency unit may be at least one of a resource block (PRB) unit, a resource block group (PRB group) unit, a control resource set unit and a scheduled data field (scheduled PDSCH) unit.

Also, the radio base station may report information about the locations for allocating data, to the user terminal, per predetermined frequency unit throughout all frequency fields. Also, the radio base station may report information about the locations for allocating data, to the user terminal, per predetermined frequency unit in a predetermined frequency field(frequency domain). When a location for allocating data in a predetermined frequency field is reported, the user terminal may select the locations for data allocation outside this predetermined frequency field based on a reference value (default value) that is configured in advance.

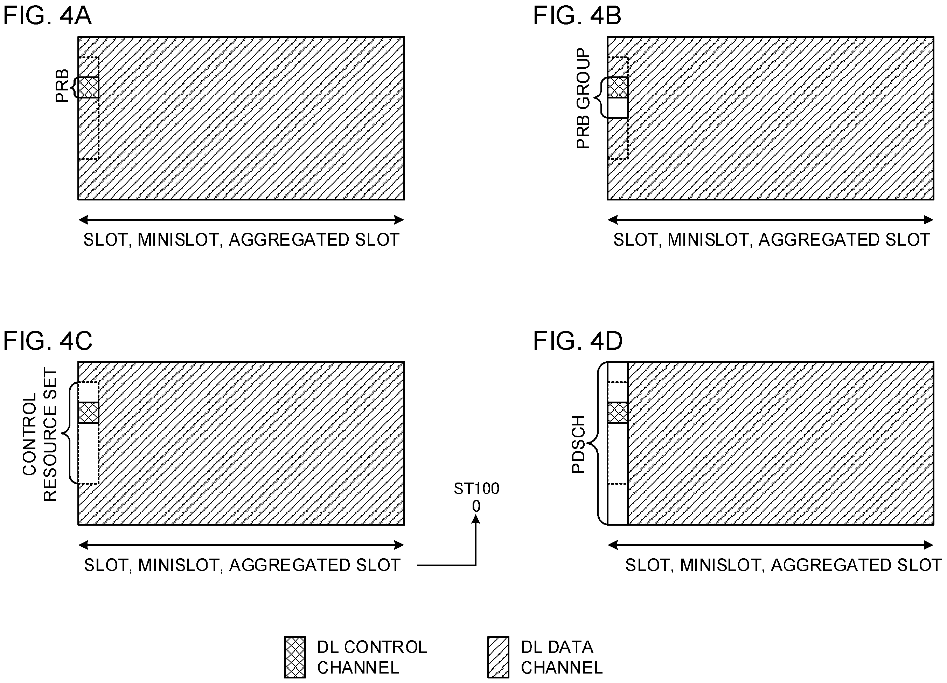

For example, the radio base station may report the location to start allocating DL data (or the location where UL data finishes being allocated), to the user terminal, for each PRB (see FIG. 4A). In this case, the radio base station can report the locations to allocate data, for each PRB included in a predetermined frequency field (for example, a control resource set). Alternatively, the radio base station may report the locations for allocating data in a predetermined PRB, based on scheduling for each user terminal.

Also, the radio base station may report the location to start allocating DL data (or the location where UL data finishes being allocated), to the user terminal, for each PRB group (see FIG. 4B). In this case, the radio base station can report the locations to allocate data, for each PRB group included in a predetermined frequency field (for example, a control resource set). Alternatively, the radio base station may report the locations for allocating data in a predetermined PRB group, based on scheduling for each user terminal. Note that a PRB group can be comprised of a predetermined number of PRBs.

Furthermore, the radio base station may report the location to start allocating DL data (or the location where UL data finishes being allocated), to the user terminal, for each control resource set (see FIG. 4C). For example, in a field in which downlink control information (downlink control channel) is allocated, the radio base station reports the same value for the location to start allocating DL data (or the location where UL data finishes being allocated), to the user terminal. In this case, it is possible to prevent the overhead of information related to the locations to allocate data from increasing. The user terminal may assume that the locations to allocate data vary in a frequency field in which control resource sets are configured, and that data starts being allocated from a predetermined symbol (for example, the top symbol) in a frequency field in which no control resource set is configured. In which fields control resource sets are configured may be reported from the radio base station to the user terminal in advance. A control resource set may be discrete fields in the frequency direction. Also, a plurality of control resource sets may be configured. A plurality of control resource sets may overlap one another in the same resource.

Furthermore, the radio base station may report the location where DL data starts being allocated (or the location where UL data finishes being allocated), to the user terminal, for each data field that is scheduled (see FIG. 4D). For example, in a field in which a data channel (PDSCH and/or PUSCH) is allocated, the radio base station reports the same value for the location to start allocating data (DL data and/or UL data), to the user terminal. In this case, it is possible to prevent the overhead of information related to the locations to allocate data from increasing. The user terminal may assume that the locations to allocate data vary in frequency fields in which data is configured.

Also, the radio base station may report the location where DL data finishes being allocated (or the location where UL data starts being allocated), for each data field (PDSCH) that is scheduled, to the user terminal. If UL data is allocated to the symbol following the symbol where DL data ends, the radio base station may report to the user terminal at least one of the location in which the DL data finishes being allocated and the location in which UL data starts being allocated. In this case, the user terminal can assume that the timing at which DL data ends and the timing at which UL data starts are the same. Also, at the scheduled PDSCH and/or PUSCH's frequencies, the user terminal may assume that the timing DL data ends and the timing UL data starts are the same.

### <Configuration of Dynamic Reporting/Semi-Static Reporting>

The locations to allocate data in the time direction may be changed dynamically or may be changed semi-statically. If the locations to allocate data are changed on a dynamic basis, the radio base station reports information related to the locations to allocate data, to the user terminal, by using downlink control information. The downlink control information (DCI) may be downlink control information (DCI) to schedule that data, and/or may be common control information that is reported in common to each user terminal or a predetermined user terminal group. When the location to start allocating data is changed on a semi-static basis, the radio base station reports information about the locations to allocate data, to the user terminal, by using higher layer signaling (for example, RRC signaling, broadcast information, etc.).

The radio base station may report whether the locations to allocate data are configured (reported) dynamically or configured semi-statically, to the user terminal, by using higher layer signaling. If information to indicate that the locations to allocate data are configured (reported) dynamically is received, the user terminal finds out the locations where data is allocated based on information contained in downlink control information and/or common downlink control information. Also, if information to indicate that the locations to allocate data are configured on a semi-static basis is received, the user terminal can find out the locations to allocate data based on information reported via higher layer signaling. Note that information regarding the locations to allocate data may be included in the information that indicates that the locations to allocate data are configured on a semi-static basis, and reported to the user terminal.

When the locations to allocate data are configured on a dynamic basis, the radio base station can transmit bit information that indicates the locations to allocate data in a predetermined field (data allocation reporting field) in downlink control information. In this case, the data allocation reporting field may be configured in downlink control information only when dynamic data reporting is configured by higher layer signaling.

For example, if the radio base station configures dynamic data reporting in the user terminal through higher layer signaling, the radio base station alters the allocation of data on a dynamic basis and provides a data allocation reporting field in downlink control information that schedules this data. On the other hand, if the radio base station configures semi-static data reporting in the user terminal through higher layer signaling, the radio base station alters the allocation of data on a semi-static basis, but provides no data allocation reporting field in downlink control information that schedules this data. By this means, the data allocation reporting field is configured in downlink control information only when necessary, so that the payload of downlink control information can be controlled in a flexible manner.

Alternatively, the data allocation reporting field may be configured in downlink control information regardless of whether dynamic data reporting is configured through higher layer signaling or not. For example, even when semi-static data reporting is configured in a user terminal through higher layer signaling, the radio base station may configure a data allocation reporting field in downlink control information that schedules that data. In this case, the size of downlink control information can be made the same regardless of whether data allocation is dynamic or not, so that the user terminal does not have to perform blind decoding multiple times for downlink control information with different payloads. This can prevent the number of times the user terminal performs blind decoding from increasing, so that the burden of receiving processes in the user terminal can be reduced.

### <Allocation Location Table>

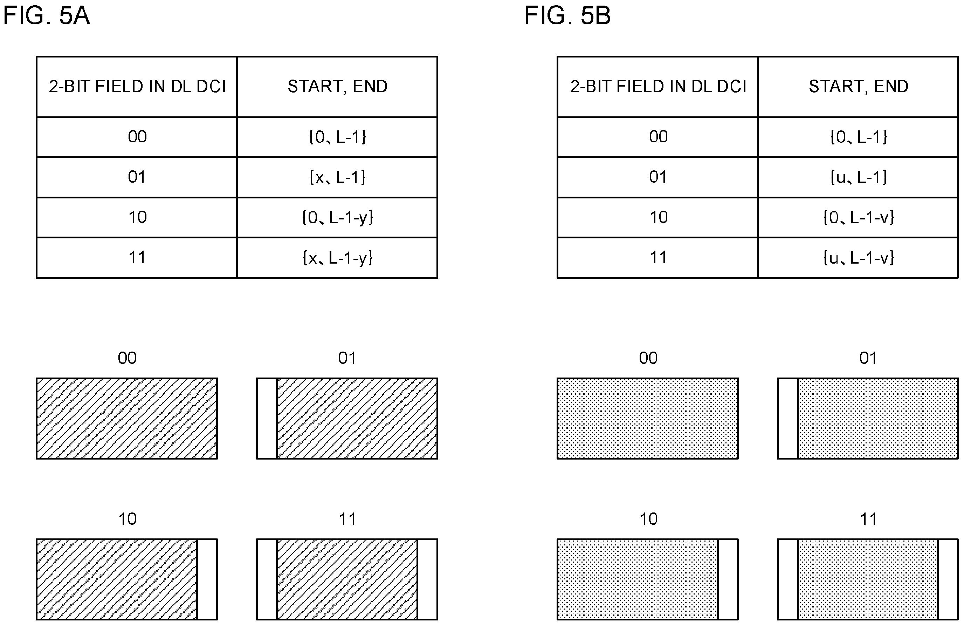

To report the locations to allocate data to the user terminal, a table may be used in which information about the locations to allocate data is defined. FIGs. 5 show examples of tables in which data allocating locations are associated with each piece of bit information that constitutes a 2-bit field. FIG. 5A shows an example of a table that defines the locations to allocate DL data, and FIG. 5B shows an example of a table that defines locations to allocate UL data. Note that the bits to configure in the bit field are not limited to 2 bits, and may be 1 bit or 3 bits or more. In addition, although FIGs. 5 define the location at which data starts being allocated and the location at which the data allocation ends, only one of them may be defined.

The user terminal can find out in which locations data is allocated by referring to the bit information of the data allocation reporting field in downlink control information that is received, and the tables of FIGs. 5. Which data allocating location each bit corresponds to can be determined by, for example, symbol number (indices).

FIG. 5A defines 4 patterns of DL data starting positions and ending positions where a slot is comprised of L symbols. To be more specific, the bits "00" represent the case in which symbol #0 (top symbol) is the location where DL data starts being allocated and symbol #L-1 (last symbol) is the location where the allocation ends. The bits "01" represent the case in which symbol #x is the location where DL data starts being allocated, and symbol #L-1 is the location where the allocation ends. The bits "10" represent the case in which symbol #0 is the location where DL data starts being allocated, and symbol #L-1-y is the location where the allocation ends. The bits "11" represent the case in which symbol #x is the location where DL data starts being allocated, and symbol #L-1-y is the location where the allocation ends. Note that x and y may each be a number greater than or equal to 1 and less than L.

Similarly, FIG. 5B defines 4 patterns of UL data starting positions and ending positions where a slot is comprised of L symbols. To be more specific, the bits "00" represent the case in which symbol #0 (top symbol) is the location where UL data starts being allocated and symbol #L-1 (last symbol) is the location where the allocation ends. The bits "01" represent the case in which symbol #u is the location where UL data starts being allocated, and symbol #L-1 is the location where the allocation ends. The bits "10" represent the case in which symbol #0 is the location where UL data starts being allocated, and symbol #L-1-v is the location where the allocation ends. The bits "11" represent the case in which symbol #u is the location where UL data starts being allocated, and symbol #L-1-v is the location where the allocation ends. Note that u and v may each be a number greater than or equal to 1 and less than L.

The value of L (for example, the number of symbols that form a frame) defined in the tables may be defined in advance in the specification (for example, L=7 or 14), or may be configured in the user terminal in advance through higher layer signaling (for example, RRC signaling, broadcast information, etc.). Also, the values of x, y, u and v may be similarly defined in advance in the specification, or may be configured in advance in the user terminal through higher layer signaling (for example, RRC signaling, broadcast information, etc.).

In this way, the signaling overhead can be prevented from increasing by reporting information about the locations to allocate data, to the user terminal, by using a table that defines the locations to allocate data.

Note that the transport block size (TBS) for scheduled data may be controlled based on information related to the locations to allocate data. For example, when a specific bit field in downlink control information specifies a TBS, the TBS that that is specified by a particular value of the bit field may be re-interpreted based on the starting position and ending position of the scheduled data and the relationship between them. For example, assume the case in which downlink control information commands a user terminal to transmit and receive DL data of a predetermined TBS (TB Size). For example, when symbol #0 is the location where DL data starts being allocated and symbol #L-1 is the location where the allocation ends, the user terminal receives DL data of TB size D. Also, it is possible to assume that, when symbol #x is the location where DL data starts being allocated and symbol #L-1-y is the location where the allocation ends, the user terminal receives DL data of TB size Dx(L-x-y)/L. By this means, the TBS size can be optimized based on the number of symbols allocated to transmit and receive data.

Alternatively, the transport block size (TBS) for scheduled data may be fixed regardless of the information about the locations for allocating data. For example, when a specific bit field in downlink control information specifies a TBS, data of this specified TBS is transmitted and received regardless of the starting position and ending position of the scheduled data. By this means, the process of finding out what TBS is needed, based on the number of symbols allocated for transmitting and receiving data, can be skipped, so that the processing load in terminals can be reduced.

### (Second Example)

A case will be described below, with a second example of the present invention, in which different slot configurations are used when transmitting data and when retransmitting this data. When slot configurations are different, this means that the field to allocate data and/or others (for example, the number of symbols) are different. Note that the configurations described below can be used for both UL data retransmission and DL data retransmission.

As described earlier, when communication is carried out by changing the allocation of DL channels and/or UL channels dynamically or semi-statically, the field to allocate data may vary between different slots. Therefore, when retransmitting data at a predetermined timing (for example, a predetermined timing after HARQ-ACK is received), the slot configuration to use when transmitting data may be different from the slot configuration to use when retransmitting this data.

For example, consider a case where, in a given slot, data for initial transmission (and of a predetermined transport block size (TBS)) is allocated from the slot's top symbol (#0) to the last symbol (#L-1), and transmitted. That is, data for initial transmission is scheduled from the top to the end of a slot. If the receiving side (a user terminal or a radio base station) fails to receive the initial transmission data, retransmitting data corresponding to this transmission data will be transmitted a predetermined timing later.

Note that the retransmission data does not have to be data to match the data that was initially transmitted, and may be data to match data that has been transmitted before the retransmission. Also, data and the retransmission data to match this data does not have to be completely the same data.

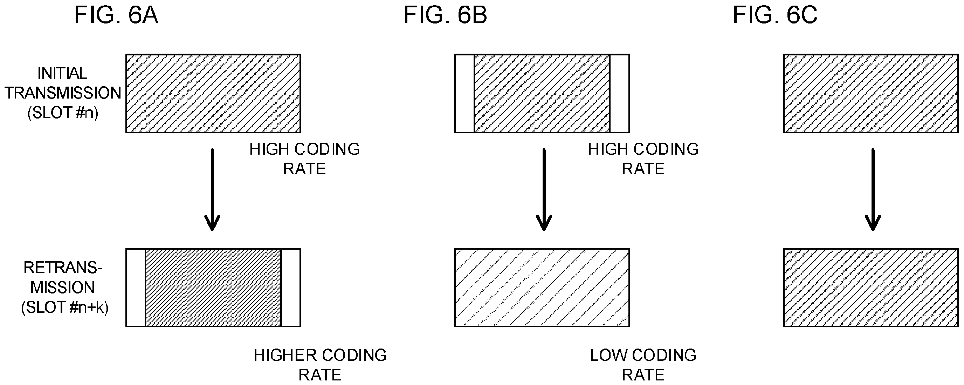

FIG. 6A shows a case in which, in a slot (#n+k), retransmission is performed by using another slot configuration in which the data allocating field is smaller than in the slot (#n) used for initial transmission. In this case, on the transmitting side, it is necessary to increase the coding rate to apply to the data to perform retransmission. FIG. 6A shows a case in which, upon retransmission, data is retransmitted based on a slot configuration in which the data is allocated from symbol #x to symbol #L-1-y of a slot. In this way, when the coding rate of data (transport block (TB)) upon retransmission is made higher than in initial transmission, it becomes difficult to control the retransmission. This is because it is difficult to generate data at a higher coding rate, and transmitting data at a higher coding rate than before the retransmission increases the likelihood that the transmission will fail.

Meanwhile, when retransmission is made by setting the coding rate lower than initial transmission, the retransmission can be performed suitably. FIG. 6B shows a case in which, in a slot (#n+k), retransmission is performed by using another slot configuration in which the data allocating field is greater than in the slot (#n) used for initial transmission. FIG. 6B shows a case where a slot configuration in which data is allocated from symbol #x to symbol #L-A-y of a slot is used upon initial transmission, and a slot configuration in which data is allocated from symbol #0 to symbol #L-1 of a slot is used upon retransmission.

Therefore, it may be possible to control retransmission based at least on a slot configuration in which the data allocating field upon retransmission is the same as at in initial transmission or larger than in initial transmission (see FIG. 6C). FIG. 6C shows a case in which slots are configured so that data is allocated to the same field (for example, data is allocated to the same number of symbols) in slots for initial transmission and retransmission. In this way, retransmission can be performed properly by limiting the slot configurations to use to retransmit data based on the slot configuration that was used to transmit this data.

### <Application of Different Number of Slots>

Meanwhile, when data is retransmitted using limited slots, there is a possibility that the timing for retransmission cannot be configured in a flexible way. For example, if data is transmitted using a slot in which no control channel is configured, the slot to use in retransmission should also be a slot in which no control channel is configured. In this case, although retransmission can be controlled not to be performed until a slot in which no control channel is allocated is configured, there is a possibility that the timing of retransmission may be delayed. Meanwhile, although it may be possible to control a slot in which no control channel is configured to be provided at a predetermined timing for retransmission from a certain user terminal, this may affect the communication of other user terminals (for example, a terminal that transmits and receives the control channel).

Therefore, with the present embodiment, it is allowed to retransmit data (for example, 1 transport block) by using a different number of slots than the predetermined time units (for example, slots) used for data transmission before the retransmission. For example, when initial data is transmitted (or when data is transmitted before retransmission) by using 1 slot, it is allowed to retransmit data using a plurality of slots (for example, 2 slots).

A user terminal and/or a radio base station can determine the number of slots to use to retransmit data based on at least one of the slot configurations used for data transmission before the retransmission and for the data transmission of the retransmission, the amount of data that can be allocated in each slot configuration, and the coding rate when each slot configuration is used.

When the user terminal receives retransmitted data of DL data and/or transmits retransmitting data of UL data, the number of slots to use to receive this retransmitted data and/or transmit this retransmitting data may be reported from the radio base station to the user terminal. The radio base station can report information about the number of slots to use for retransmission, to the user terminal, by using at least one of higher layer signaling, downlink control information that schedules data, and L1 signaling. When a plurality of slots are used, these slots may be contiguous slots or non-contiguous slots. Note that, when retransmitting UL data, the number of slots to use for the retransmission may be determined autonomously on the user terminal side.

Also, the user terminal can apply different slot configurations (for example, different data allocation starting positions and/or ending positions) to the slot to use to transmit data and the slot to use to retransmit the data. In this way, by not limiting the slot configurations for use for retransmission, it is possible to prevent the timing for retransmission from being delayed. Also, even if no control channel is configured in the slot that is used to transmit data, the control channel can be allocated to the slot to use in retransmission.

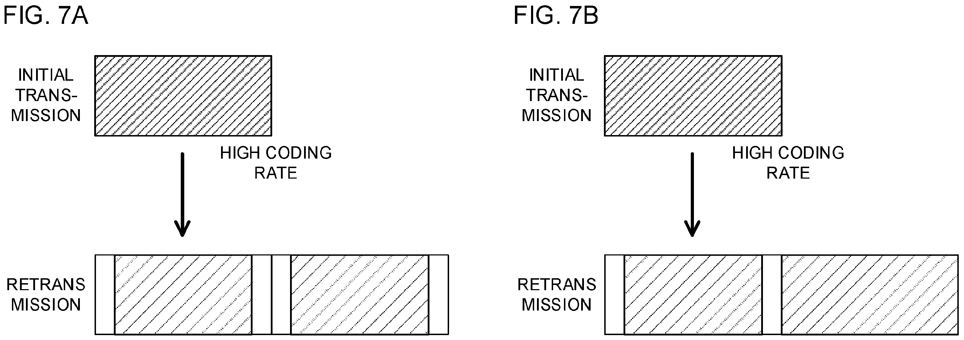

When certain data (for example, 1 transport block (TB)) is transmitted using multiple slots, the same slot configuration (for example, the same data allocation starting position and/or ending position) can be applied to each slot (see FIG. 7A). FIG. 7A shows a case in which 2 slots with the same slot configuration are used for retransmission. In this way, by using the same slot configuration, certain data (for example, 1 transport block (TB)) can be divided evenly over a number of slots, and the adaptive control of, for example, coding rates and modulation schemes can be simplified.

Alternatively, when certain data is transmitted by using a number of slots, different slot configurations may be applied to each slot (see FIG. 7B). FIG. 7B shows a case in which 2 slots with different slot configurations are used for retransmission. In this way, each slot configuration can be designed based on different configurations, so that slot configurations, allocation of control channels and so on can be configured in a flexible way.

Also, retransmission of data (1 TB), which is transmitted by using N slots, may be configured to use M slots. Here, it is assumed that N<M (or N≤M). Making the number of slots to use for retransmission greater than the number of slots used to transmit data prior to the retransmission prevents the data coding rate from increasing upon retransmission (for example, the data coding rate upon retransmission can be lowered), so that retransmission can be performed suitably.

### <Coding/Rate Matching Process>

When the number of slots (M) to use to transmit retransmitting data (for example, 1 TB) is made greater than the number of slots (N) to use for data transmission before retransmission, the coding process and/or other processes may be performed for 1 TB, or the coding process and/or other processes may be performed by dividing 1 TB.

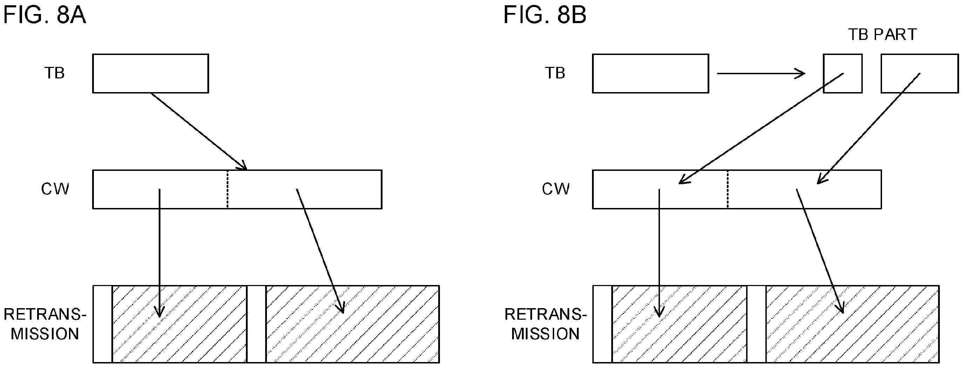

For example, transmission apparatus (a user terminal and/or a radio base station) that transmits retransmissions performs coding and/or rate matching for data (for example, 1 TB) assuming that there are M slots. Then, the transmission apparatus maps the data (one or more codewords) having been subjected to coding and/or rate matching over M slots (see FIG. 8A). Referring to FIG. 8A, after the coding process and the rate matching process are performed based on the assumption of 1 TB being comprised of 2 slots, the corresponding codeword is divided and mapped to 2 slots. By this means, the number of information bits per encoded bit sequence when a TB is given can be maximized, and high coding gain can be achieved.

Alternatively, the transmission apparatus divides data (for example, 1 TB) into a plurality of TB parts, and performs coding and/or rate matching for each TB part. Then, the transmission apparatus may map the data (multiple codewords) having been subjected to coding and/or rate matching to M slots (see FIG. 8B). Each TB part may be a code block or a code block group. In FIG. 8B, 1 TB is divided into 2 TB parts (for example, code blocks), and the coding process and the rate matching process are performed for each code block. Following this, 2 corresponding codewords are mapped to 2 slots. By this means, error correction decoding and error detection can be performed per slot, so that error control can be readily implemented in slot units (code block units) (for example, ACK/NACK feedback can be sent in code block units, retransmission can be made in code block units, etc.) and so forth.

The above description has shown a case in which data (for example, 1 TB) to be transmitted using N slots is retransmitted using M slots, where M is greater than N, but this is by no means limiting. A configuration in which data to be transmitted using N slots is retransmitted using M slots may be used as well, where M is less than N. Here, it is assumed that N>M (or N≥M).

For example, if the data allocating field in the slot to use to transmit data (for example, initial transmission or the first retransmission) is small, data is transmitted using multiple slots. Also, if the data allocating field in the slot to use in retransmission (for example, the first retransmission or second retransmission) is large, the number of slots to use for retransmission is smaller than the number of slots used to transmit data prior to this retransmission. In this way, by reducing the number of slots to use for retransmission, it is possible to prevent retransmission from being delayed.

Note that configurations may be designed here so that the reference value for the locations to allocate data (including retransmitting data) and/or the reference value (default value) for the number of slots in which data is scheduled are configured in advance, and changes from these reference values are reported from radio base stations to user terminals. The reference values may be defined in advance in the specification, or may be included in broadcast information (or system information) from radio base station to user terminal and the like, and configured.

### <Application of the Number of Different Layers>

Furthermore, according to another example of the present embodiment, it is allowed to retransmit data (for example, 1 TB) by using a different number of layers than the predetermined time units (for example, slots) used for data transmission prior to the retransmission. For example, when initial data is transmitted (or when data is transmitted before retransmission) by using 1 layer, it is allowed to retransmit data using a plurality of layers (for example, 2 layers).

A user terminal and/or a radio base station can determine the number of layers to use to retransmit data based on at least one of the slot configurations used for data transmission before the retransmission and for the data transmission of the retransmission, the amount of data that can be allocated in each slot configuration, and the coding rate when each slot configuration is used.

When the user terminal receives retransmitted data of DL data and/or transmits retransmitting data of UL data, the number of layers to use to receive this retransmitted data and/or transmit this retransmitting data may be reported from the radio base station to the user terminal. The radio base station can report information about the number of layers to use for retransmission, to the user terminal, by using at least one of higher layer signaling, downlink control information that schedules data, and L1 signaling. Note that, when retransmitting UL data, the number of layers to use for the retransmission may be determined autonomously on the user terminal side.

Also, the user terminal can apply different slot configurations (for example, different data allocation starting positions and/or ending positions) to the slot to use to transmit data and the slot to use to retransmit the data. In this way, by not limiting the slot configurations for use for retransmission, it is possible to prevent the timing for retransmission from being delayed. Also, even if no control channel is configured in the slot that is used to transmit data, the control channel can be allocated to the slot for use for retransmission.

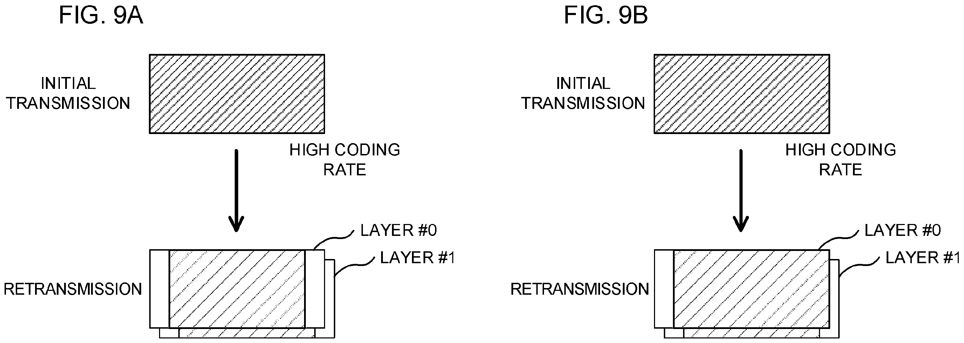

When certain data (for example, 1 TB) is transmitted using multiple layers (here, layers #0 and #1), the same slot configuration (for example, the same data allocation starting position and/or ending position) can be applied to each layer (see FIG. 9A). FIG. 9A shows a case in which 2 layers with the same slot configuration are used for retransmission. In this way, by applying the same slot configuration to each layer, certain data (for example, 1 transport block (TB)) can be divided evenly over a number of layers, and the adaptive control of, for example, coding rates and modulation schemes can be simplified.

Alternatively, when certain data is transmitted by using a number of layers, different slot configurations may be applied to each slot (see FIG. 9B). FIG. 9B shows a case in which 2 layers with different slot configurations are used for retransmission. In this way, each layer' slot configuration can be designed based on different configurations, so that slot configurations, allocation of control channels and so on can be configured in a flexible way.

Also, retransmission of data (1 TB), which is transmitted by using P layers, may be configured to use Q layers. Here, it is assumed that P<Q (or P≤Q). Making the number of layers to use for retransmission greater than the number of layers used to transmit data prior to the retransmission prevents the data coding rate from increasing upon retransmission (for example, the data coding rate upon retransmission can be lowered), so that retransmission can be performed suitably.

### <Coding/Rate Matching Process>

When the number of layers (Q) to use to transmit retransmitting data (for example, 1 TB) is made greater than the number of layers (P) to use for data transmission before retransmission, the coding process and/or other processes may be performed for 1 TB, or the coding process and/or other processes may be performed by dividing 1 TB.

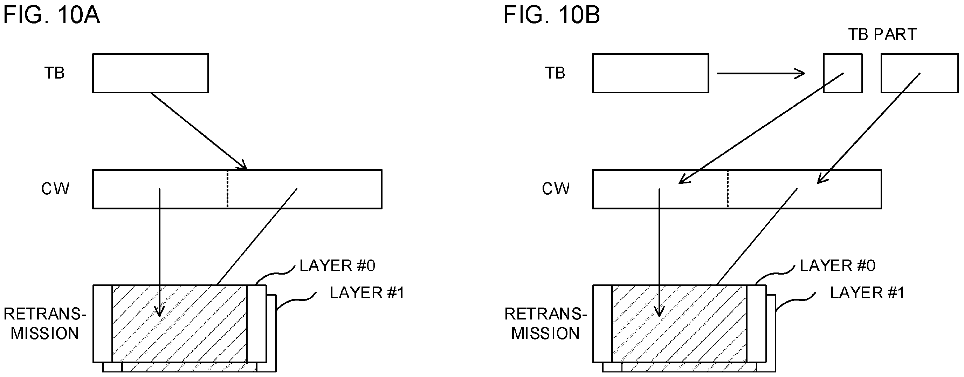

For example, transmission apparatus (a user terminal and/or a radio base station) that transmits retransmissions performs coding and/or rate matching for data (for example, 1 TB) assuming that there are Q layers. Then, the transmission apparatus maps the data (one or more codewords) having been subjected to coding and/or rate matching over Q layers (see FIG. 10A). Referring to FIG. 10A, after the coding process and the rate matching process are performed based on the assumption of 1 TB being comprised of 2 layers, the corresponding codeword is divided and mapped to 2 layers. By this means, the number of information bits per encoded bit sequence when a TB is given can be maximized, and high coding gain can be achieved.

Alternatively, the transmission apparatus divides data (for example, 1 TB) into a plurality of TB parts (TP parts), and performs coding and/or rate matching for each TB part. Then, the transmission apparatus may map the data (multiple codewords) having been subjected to coding and/or rate matching to each of Q layers (see FIG. 10B). Each TB part may be a code block or a code block group. In FIG. 10B, 1 TB is divided into 2 TB parts (for example, code blocks), and the coding process and the rate matching process are performed for each code block. Following this, 2 corresponding codewords are mapped to 2 layers. By this means, error correction decoding and error detection can be performed per slot, so that error control can be readily implemented in slot units (code block units) (for example, ACK/NACK feedback can be sent in code block units, retransmission can be made in code block units, etc.) and so forth.

The above description has shown a case in which data (for example, 1 TB) to be transmitted using P layers is retransmitted using Q layers, where Q is greater than P, but this is by no means limiting. A configuration in which data to be transmitted using P layers is retransmitted using Q layers may be used as well, where Q is less than P. Here, it is assumed that P>Q (or P≥Q).

For example, if the data allocating field in the slot to use to transmit data (for example, initial transmission or the first retransmission) is small, data is transmitted using multiple layers. Also, if the data allocating field in the slot to use in retransmission (for example, the first retransmission or second retransmission) is large, the number of layers to use for retransmission is smaller than the number of layers used to transmit data prior to this retransmission. Thus, the spectral efficiency (the efficiency of the use of space) can be improved by reducing the number of layers to use for retransmission.

Note that configurations may be designed here so that the reference value for the locations to allocate data (including retransmitting data) and/or the reference value (default value) for the number of layers in which data is scheduled are configured in advance, and changes from these reference values are reported from radio base stations to user terminals. The reference values may be defined in advance in the specification, or may be included in broadcast information (or system information) from radio base station to user terminal and the like, and configured.

### (Radio Communication System)

Now, the structure of the radio communication system according to one embodiment of the present invention will be described below. In this radio communication system, communication is performed using one of the radio communication methods according to the herein-contained embodiments of the present invention, or a combination of these.

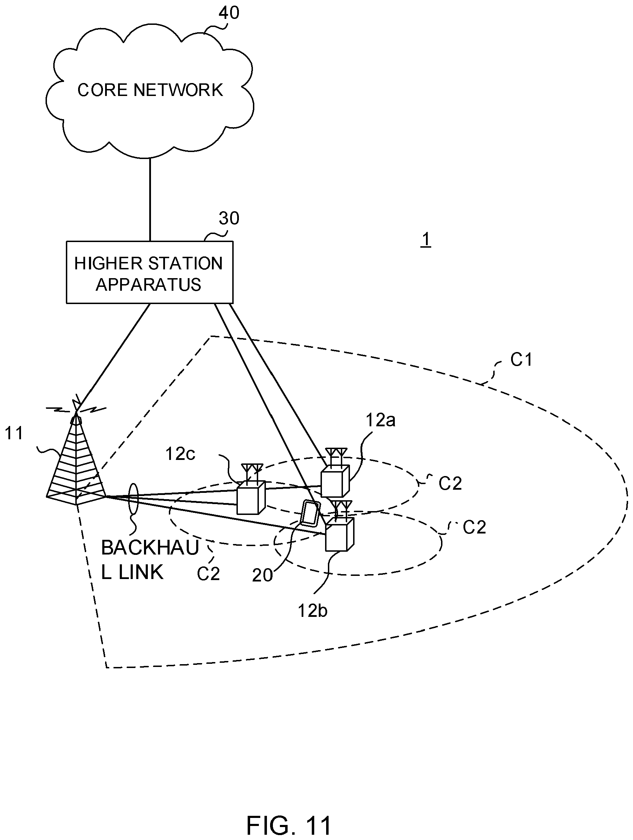

FIG. 11 is a diagram to show an exemplary schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th Generation mobile communication system)," "5G (5th Generation mobile communication system)," "FRA (Future Radio Access)," "New-RAT (Radio Access Technology)," "NR (New Radio)," and so on, or may be seen as a system to implement these.

The radio communication system 1 includes a radio base station 11 that forms a macro cell C1, with a relatively wide coverage, and radio base stations 12a to 12c that are placed within the macro cell C1 and that form small cells C2, which are narrower than the macro cell C1. Also, user terminals 20 are placed in the macro cell C1 and in each small cell C2. The arrangements of cells and user terminals 20 are not limited to those illustrated in the drawings.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, 5 or fewer CCs or 6 or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "gNB," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, OFDMA (Orthogonal Frequency Division Multiple Access) is applied to the downlink and SC-FDMA (Single-Carrier Frequency Division Multiple Access) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes may be used as well.

The radio communication system 1 may be structured so that different numerologies are applied within cells and/or between cells. Note that, a numerology refers to, for example, a communication parameter (for example, subcarrier spacing, bandwidth, etc.) that is used to transmit and receive a certain signal.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACK," "ACK/NACK," and so forth) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, downlink radio quality information (CQI (Channel Quality Indicator)), delivery acknowledgment information and so on are communicated by the PUCCH. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRS (Sounding Reference Signal)), demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

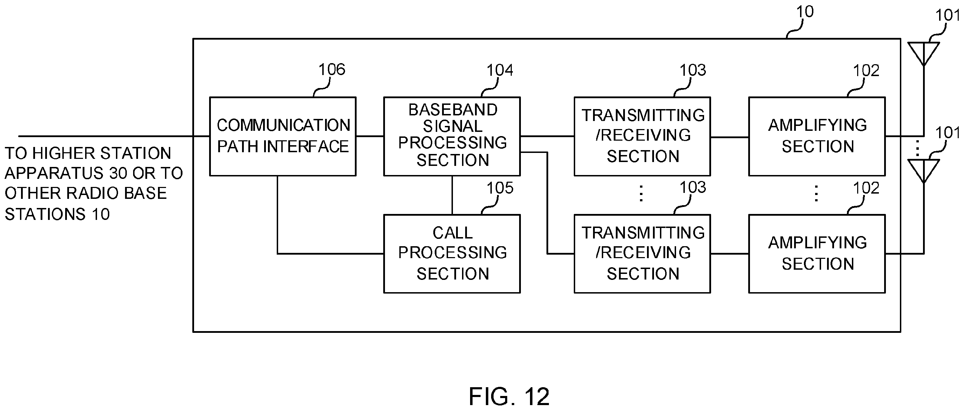

FIG. 12 is a diagram to show an exemplary overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing of communication channels (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 transmit downlink control information (downlink control channel), downlink data (downlink data channel), and information related to the locations to allocate data in the time direction per predetermined frequency-domain unit. Also, the transmitting/receiving sections 103 transmit information that shows whether or not the information related to the locations to allocate data is reported on a dynamic basis, via higher layer signaling (for example, RRC signaling, broadcast information, etc.). In addition, the transmitting/receiving sections 103 transmit information about the number of slots to use to transmit and/or retransmit data, the number of layers and so forth.

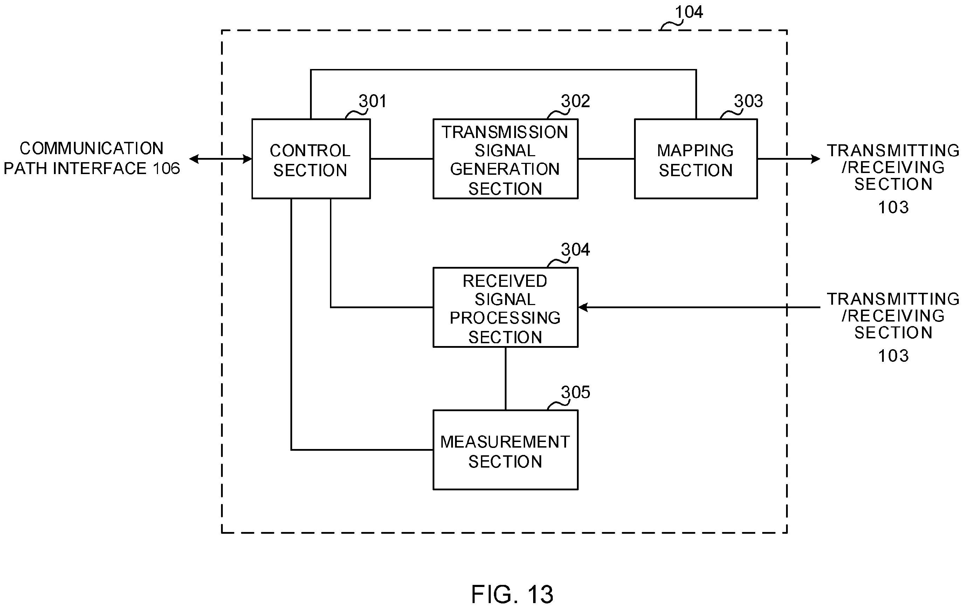

FIG. 13 is a diagram to show an exemplary functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, the generation of signals in the transmission signal generation section 302, the allocation of signals by the mapping section 303 and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH) and downlink control signals (for example, signals communicated in downlink control channels). Also, the control section 301 controls the generation of downlink control signals (for example, delivery acknowledgement information), downlink data signals and so on, based on the results of deciding whether or not retransmission control is necessary for uplink data signals, and so on. Also, the control section 301 controls the scheduling of synchronization signals (for example, PSS (Primary Synchronization Signal)/SSS (Secondary Synchronization Signal)), downlink reference signals (for example, CRS, CSI-RS, DMRS, etc.) and so on.

In addition, the control section 301 controls the scheduling of uplink data signals (for example, signals transmitted in the PUSCH), uplink control signals (for example, signals transmitted in the PUCCH and/or the PUSCH), random access preambles transmitted in the PRACH, uplink reference signals, and so on.

When data (DL data and/or UL data) is retransmitted, the control section 301 controls the retransmission of this data by using a different number of slots and/or layers than the number of slots and/or layers used for data transmission before the retransmission, based on predetermined conditions (see FIGs. 7 and FIGs. 9). Also, the data allocating locations in a slot and/or layer used for data transmission before retransmission and the data allocating locations in a slot/or layer used for retransmission of this data may be different.

Also, the control section 301 exerts control so that a transport block that corresponds to data is encoded and mapped over slots and/or layers that are used to retransmit the data, or a transport block corresponding to data is divided and encoded based on the number of slots and/or layers used to retransmit this data, and then mapped to different slots and/or layers separately (see FIGs. 8 and FIGs. 10).

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are selected based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information, acquired through the receiving processes, to the control section 301. Also, the received signal processing section 304 outputs the received signals and/or the signals after the receiving processes to the measurement section 305.

The measurement section 305 conducts measurements with respect to the received signal. The measurement section 305 can be constituted by a measurer, a measurement circuit or measurement apparatus that can be described based on general understanding of the technical field to which the present invention pertains.

The measurement section 305 may measure the received power (for example, RSRP (Reference Signal Received Power)), the received quality (for example, RSRQ (Reference Signal Received Quality), SINR (Signal to Interference plus Noise Ratio), etc.), uplink transmission path information (for example, CSI), and so on. The measurement results may be output to the control section 301.

### (User Terminal)

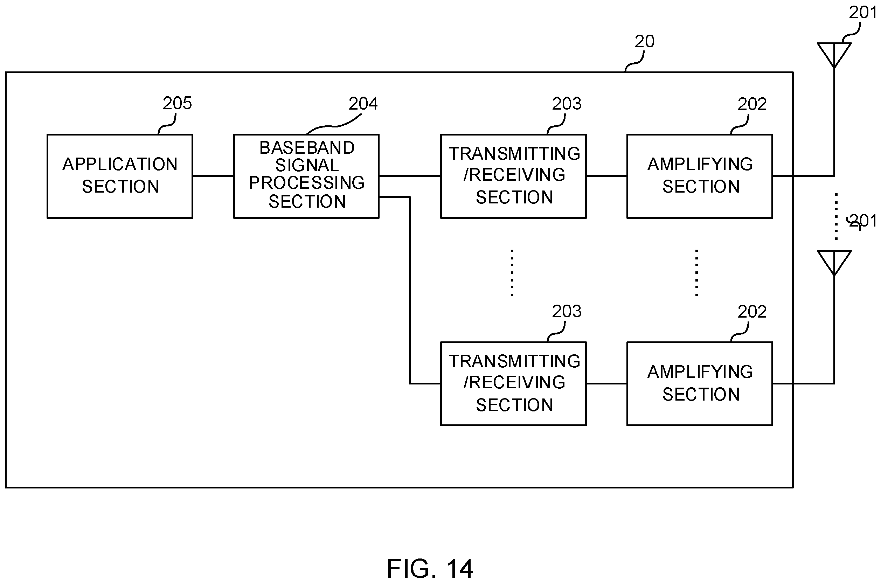

FIG. 14 is a diagram to show an exemplary overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

The transmitting/receiving sections 203 receive downlink control information (downlink control channel), downlink data (downlink data channel), and information related to the locations to allocate data in the time direction per predetermined frequency-domain unit. Also, uplink control information (uplink control channel) and uplink data (uplink data channel) are transmitted. Also, the transmitting/receiving sections 203 receive information that shows whether or not information related to the locations to allocate data is reported on a dynamic basis, via higher layer signaling (for example, RRC signaling, broadcast information, etc.). The transmitting/receiving sections 203 also receive information about the number of slots to use to transmit and/or retransmit data, the number of layers and so forth.

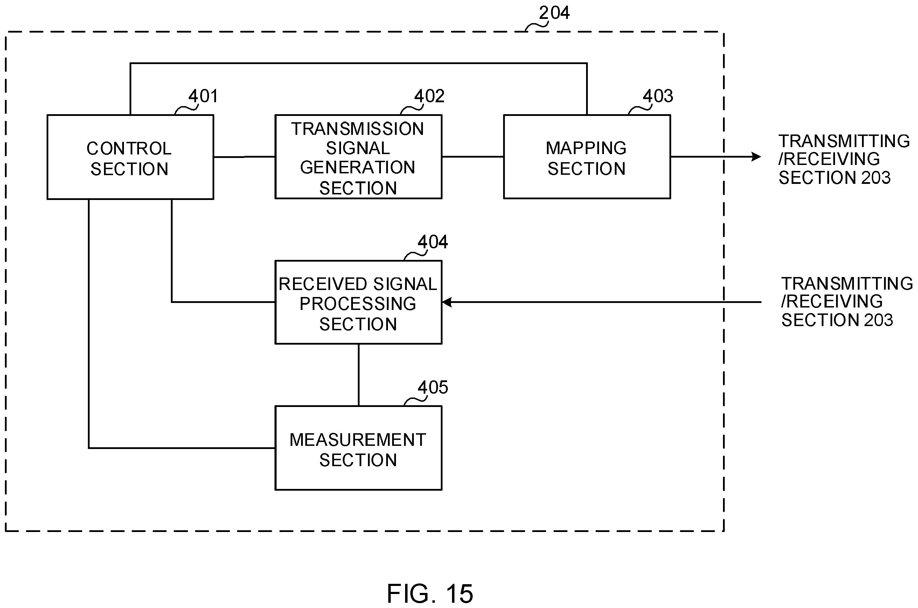

FIG. 15 is a diagram to show an exemplary functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (for example, signals transmitted in a downlink control channel) and downlink data signals (for example, signals transmitted in the PDSCH) transmitted from the radio base station 10, via the received signal processing section 404. The control section 401 controls the generation of uplink control signals (for example, delivery acknowledgement information) and/or uplink data signals based on the results of deciding whether or not retransmission control is necessary for the downlink control signals and/or downlink data signals, and so on.

When data is retransmitted, the control section 401 controls the retransmission of this data by using a different number of slots and/or layers than the number of slots and/or layers used for data transmission before the retransmission, based on predetermined conditions (see FIGs. 7 and FIGs. 9). The data allocating locations in a slot and/or layer used for data transmission before retransmission and the data allocating locations in a slot/or layer used for retransmission of this data may be different.

Also, the control section 401 exerts control so that a transport block that corresponds to data is encoded and mapped over slots and/or layers that are used to retransmit the data, or a transport block corresponding to data is divided and encoded based on the number of slots and/or layers used to retransmit this data, and then mapped to different slots and/or layers separately (see FIGs. 8 and FIGs. 10).

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information and/or channel state information (CSI) based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. For example, the measurement section 405 performs measurements using downlink reference signals transmitted from the radio base station 10. The measurement section 405 can be constituted by a measurer, a measurement circuit or measurement apparatus that can be described based on general understanding of the technical field to which the present invention pertains.

The measurement section 405 may measure the received power (for example, RSRP), the received quality (for example, RSRQ, SINR, etc.), downlink transmission path information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

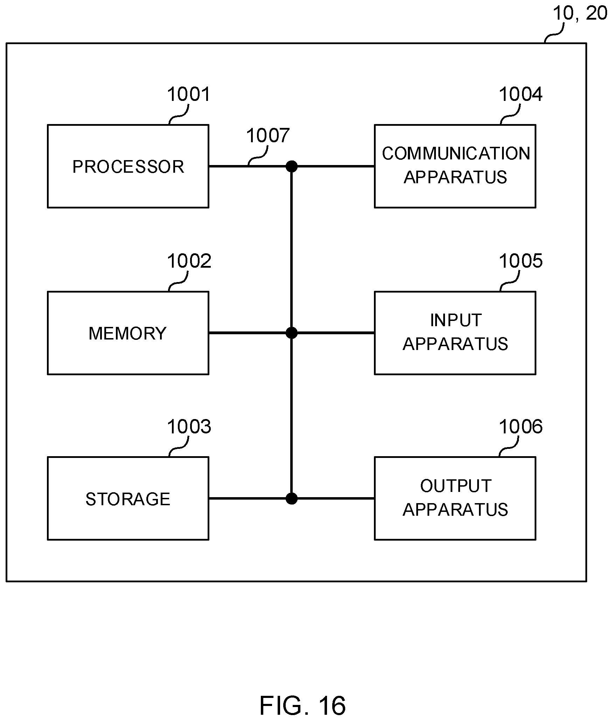

For example, the radio base station, user terminals and so on according to one embodiment of the present invention may function as a computer that executes the processes of the radio communication method of the present invention. FIG. 16 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may consist of one or more symbols in the time domain. Also, a minislot may be referred to as a "subslot."

A radio frame, a subframe, a slot, a minislot and a symbol all represent the time unit in signal communication. A radio frame, a subframe, a slot, a minislot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when 1 slot or 1 minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time length of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," "a partial TTI" (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 minislot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, minislots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other equivalent information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information or by reporting other pieces of information).

Decisions may be made in values represented by 1 bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access." As used herein, 2 elements may be considered "connected" or "coupled" to each other by using one or more electrical wires, cables and/or printed electrical connections, and, as a number of non-limiting and non-inclusive examples, by using electromagnetic energy, having wavelengths in the radio frequency, microwave and/or optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a receiving section that receives downlink control information; and
a control section that controls reception and/or transmission of scheduled data based on the downlink control information,
wherein the receiving section receives information related to a location to allocate the data in a time direction, for each given frequency-domain unit.

2. The user terminal according to claim 1, wherein the receiving section receives, via higher layer signaling, information that shows whether or not information about the location to allocate the data is reported on a dynamic basis.

3. The user terminal according to claim 1 or claim 2, wherein, when data is retransmitted, the control section controls retransmission of the data based on a given condition, by using a different number of slots and/or layers than data transmission before the retransmission.

4. The user terminal according to claim 3, wherein the data allocating location in slots/or layers used for data transmission before the retransmission is different from the data allocating location in the slots/or layers used for the retransmission of the data.

5. The user terminal according to one of claim 1 to claim 4, wherein the control section encodes a transport block corresponding to the data and maps the transport block over the slots and/or layers to use for the data retransmission, or, after dividing and encoding the transport block corresponding to the data based on the number of slots and/or layers to use for the data retransmission, maps the divided transport blocks to different slots and/or layers separately.

6. A radio communication method for a user terminal, comprising the steps of:
receiving downlink control information; and
controlling receipt and/or transmission of scheduled data based on the downlink control information,
wherein information related to a location to allocate the data in a time direction is received, for each predetermined frequency-domain unit.
